(19) Europäisches Patentamt
European Patent Office
Office européen des brevets

(11) **EP 1 630 459 B1**

(12) **EUROPÄISCHE PATENTSCHRIFT**

(45) Veröffentlichungstag und Bekanntmachung des Hinweises auf die Patenterteilung:
**10.03.2010 Patentblatt 2010/10**

(51) Int Cl.:
*F16H 61/02* *(2006.01)*   *F16H 59/48* *(2006.01)*
*F16H 59/54* *(2006.01)*   *F16H 61/16* *(2006.01)*
*F16H 61/21* *(2006.01)*

(21) Anmeldenummer: **05016632.1**

(22) Anmeldetag: **12.08.2005**

(54) **Verfahren zum Regeln eines Schaltvorgangs bei einem automatisierten Schaltgetriebe**

Method for controlling shifting in an automated transmission

Méthode de contrôle d'un changement de vitesses dans une boîte de vitesses automatisée

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **24.08.2004 DE 102004040824**

(43) Veröffentlichungstag der Anmeldung:
**01.03.2006 Patentblatt 2006/09**

(73) Patentinhaber: **LuK Lamellen und Kupplungsbau Beteiligungs KG**
**77815 Bühl (DE)**

(72) Erfinder: **De Araujo Ortega, Ricardo**
**77815 Bühl (DE)**

(56) Entgegenhaltungen:
**DE-A1- 10 242 015    FR-A1- 2 655 121**
**US-A- 5 016 495    US-A- 5 890 993**
**US-A1- 2002 032 098    US-B1- 6 530 291**

## Beschreibung

Die Erfindung betrifft ein Verfahren zum Regeln eines Schaltvorgangs bei einem automatisierten Schaltgetriebe, insbesondere eines Schaltvorgangs, bei dem von einem höheren Ausgangsgang in einen niedrigeren Zielgang geschaltet werden soll.

Wenn der Fahrer eines Fahrzeugs mit einem automatisierten Schaltgetriebe sportlich fährt und in einer Situation herunterschalten möchte, in der er gleichzeitig das Fahrzeug durch Aufbringen der Fahrzeugbremsen abbremst, wird gewöhnlich der Schaltvorgang durch das automatisierte Schaltgetriebe derart geregelt, dass abgewartet wird, bis die Drehzahl einer Getriebeeingangswelle auf eine Drehzahl abgefallen ist, die der Drehzahl der Getriebeeingangswelle im anvisierten Gang entspricht. Dies bedeutet, dass in solchen Situationen eine Verzögerung des Schaltvorgangs auftritt, die vom Fahrer so empfunden werden kann, als ob das Getriebe auf den Schaltbefehl zum Herunterschalten nicht reagiert.

Kupplungssteuerungen für verschiedene Fahrzustände und Fahrsituationen für automatisierte Schaltgetriebe sind bekannt. Beispielsweise wird während des Fahrens ohne Fahrpedal, d. h. nur mit der Kupplung, gemäß der US 6,024,673 unterschieden, ob gleichzeitig eine Bremse betätigt wird oder nicht und je nach Fahrzustand unterschiedliche Kupplungskennfelder angewendet.

Bei der in der EP 0 239 416 B1 vorgeschlagenen Kupplungssteuerung wird zunächst ebenfalls überprüft, ob das Bremspedal des Fahrzeugs niedergedrückt ist oder nicht. Außerdem wird geprüft, ob die Bremskraft höher als ein vorgegebener Wert ist und gleichzeitig die Rotationsgeschwindigkeit des Motors niedriger als ein vorgegebener Wert ist, welcher von einer Getriebeschaltposition abhängt. Die Kupplung wird bei einem abrupten Bremsvorgang gelöst, um ein unerwünschtes Stoppen des Motors zu verhindern.

Weiterhin ist aus der US 6,530,291 B1, die als nächstliegender Stand der Technik angesehen wird, ein Verfahren zum automatisch ausgelösten Herunterschalten eines Schaltgetriebes bekannt, das in Abhängigkeit von einer festgestellten Änderungsrate der Fahrzeuggeschwindigkeit einen Schaltvorgang einleitet.

Der Erfindung liegt die Aufgabe zu Grunde, bei einem automatisierten Schaltgetriebe Situationen bei Schaltvorgängen von einem höheren Ausgangsgang in einen niedrigeren Zielgang zu vermeiden, in denen der Fahrer das Warten der Kupplungssteuerung auf das Erreichen einer bestimmten Drehzahl der Getriebeeingangswelle als ein schlechtes Ansprechverhalten der Schaltung auf den Schaltbefehl empfindet.

Diese Aufgabe wird mit einem Verfahren mit den Merkmalen des Anspruchs 1 gelöst. Bevorzugte Ausführungsformen sind in den abhängigen Ansprüchen angegeben.

Die mögliche Verzögerung des Schaltvorgangs durch die Kupplungssteuerung soll ein Überdrehen der Getriebeeingangswelle vermeiden. Davon ausgehend liegt der Erfindung der Gedanke zugrunde, bei einem Schaltvorgang, während gleichzeitig die Bremse aufgebracht ist und während eine deutliche Verzögerung des Fahrzeugs vorliegt, nicht darauf zu warten, bis tatsächlich die dem einzulegenden Gang entsprechende Getriebewelleneingangsdrehzahl erreicht ist, sondern den Schaltvorgang bereits früher zu beginnen. Der Beginn des Schaltvorgangs wird auf einen Zeitpunkt festgelegt, zu dem eine erwartete Drehzahl der Getriebeeingangswelle niedriger als eine maximal tolerierbare Drehzahl der Getriebeeingangswelle im Zielgang ist. Die erwartete Drehzahl geht von der Annahme aus, dass der Schaltvorgang unmittelbar begonnen wird und berücksichtigt die zum Schaltvorgang benötigte Zeit. Dadurch kann der Schaltvorgang früher begonnen werden, solange die Drehzahl der Getriebeeingangswelle noch über der maximalen Drehzahl liegt, die nach Abschluss des Schaltvorgangs für den Zielgang vorhanden sein darf. Dies verkürzt die Zeit zwischen dem vom Fahrer gegebenen Befehl für einen Schaltvorgang und dem von der Kupplung tatsächlich durchgeführten Schaltvorgang, so dass der Fahrer nicht die Empfindung hat, das Fahrzeug würde auf seinen Schaltbefehl nicht ansprechen.

Der Grenzwert, ab dem der Schaltvorgang tatsächlich durch die Kupplungssteuerung eingeleitet wird, wird vorzugsweise aus der aktuellen Drehzahl eines Rads des Fahrzeugs und der durch die Bremse aufgebrachten Fahrzeugverzögerung berechnet, indem unter Zugrundelegung einer Schaltzeit eine Drehzahl der Getriebeeingangswelle nach Ablauf der Schaltzeit vorausgesagt wird. Wenn diese vorhergesagte Drehzahl kleiner oder gleich einem Grenzwert für die Drehzahl der Eingangswelle ist, der vom einzulegenden Gang abhängt, kann der Schaltvorgang durchgeführt werden. Die Schaltzeit ist beispielsweise eine durchschnittliche Schaltzeit, die abhängig vom jeweils verwendeten Getriebe ist. Durch das Vorverlegen des Schaltvorgangs zu einem Zeitpunkt, zu dem die Getriebeeingangswelle noch nicht die Drehzahl erreicht hat, die für den niedrigeren Gang erwartet ist, kann der Schaltvorgang mehr als eine Sekunde (1 s) früher durchgeführt werden, was vom Fahrer als unmittelbareres Ansprechen des Fahrzeugs auf seinen Schaltbefehl empfunden wird.

Vorzugsweise wird die Routine zur Bestimmung des Zeitpunkts zum Einleiten des Schaltvorgangs nur dann ausgeführt, wenn eine vorgegebene Minimalbremskraft durch das Bremsgerät des Fahrzeugs aufgebracht wird. Solange der Schaltvorgang nicht eingeleitet ist bzw. nach dessen Abschluss kann die Bremswirkung des Motors ausgenützt werden.

Die Erfindung wird im Folgenden beispielhaft anhand der beigefügten Figuren beschrieben, in denen:

Figur 1 einen Antriebsstrang eines Kraftfahrzeugs mit einem Blockschaltbild einer Kupplungssteuerungsvorrichtung zeigt; und

Figur 2 ein Flussdiagramm des erfindungsgemäßen Kupplungssteuerungsverfahrens zeigt.

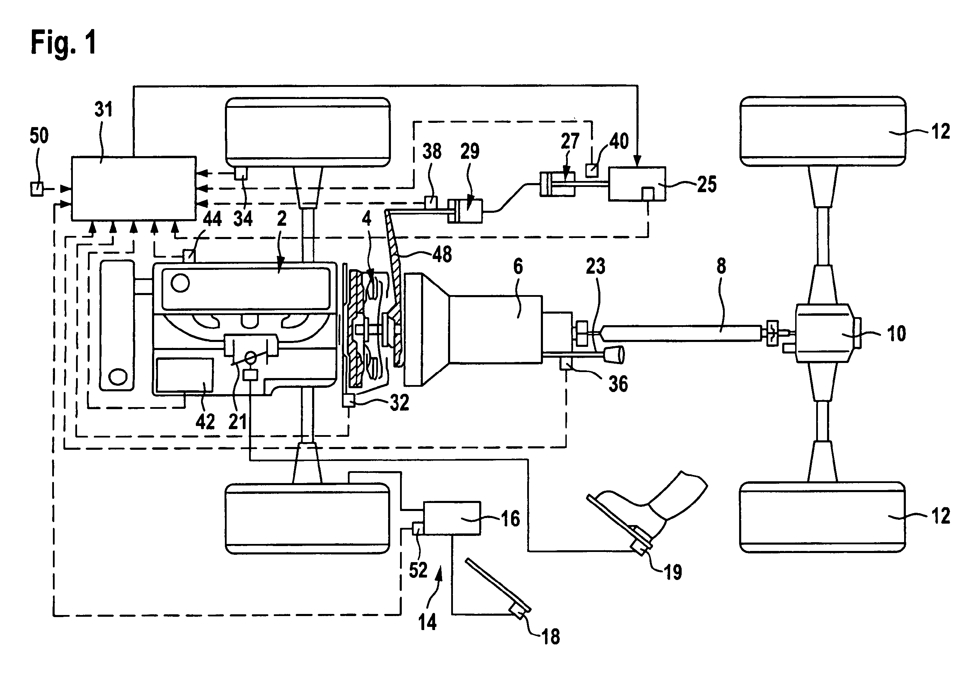

Der in Figur 1 schematisch dargestellte Antriebsstrang eines Kraftfahrzeugs weist einen Motor, beispielsweise eine Brennkraftmaschine 2, auf, die über eine Kupplung 4 mit einem Getriebe 6 verbunden ist. Das Getriebe 6 ist vorzugsweise ein Parallelschaltgetriebe. Das Getriebe treibt über eine Kardanwelle 8 und ein Differential 10 die Hinterräder 12 des Fahrzeugs an. Zur Abbremsung des Fahrzeugs ist eine Bremsanlage 14 mit einem Bremsgerät 16 vorgesehen, das über ein Bremspedal 18 betätigt wird. Wenngleich nur die Verbindung vom Bremsgerät 16 zu dem linken Vorderrad dargestellt ist, versteht sich, dass das Bremsgerät 16 mit allen Rädern des Kraftfahrzeugs zusammenwirkt.

Zur Steuerung der Last der Brennkraftmaschine 2 dient ein Fahrpedal 19, das eine Drosselklappe 21 ansteuert. Das Getriebe wird mittels eines Schalthebels 23 geschaltet. Die Kupplung 4 ist automatisiert und wird von einer Betätigungseinheit, wie z. B. von einem Aktor 25, über einen Geberzylinder 27 und Nehmerzylinder 29 betätigt. Der Nehmerzylinder 29 wirkt mit einem Kupplungshebel 48 zusammen, der von einer nicht dargestellten Kupplungsrückstellfeder in seine Ruhelage gedreht ist, in der die Kupplung 4 vollständig geschlossen ist, d. h. maximales Moment übertragen kann.

Der Aktor 25 wird von einer Steuereinheit, wie z. B. einem elektronischen Steuergerät 31 aus angesteuert, das einen Mikroprozessor enthält und Daten von beispielsweise einem Sensor 32 für die Drehzahl der Brennkraftmaschine, einem Sensor 34 zur Erfassung der Raddrehzahl des Fahrzeugs, einem Sensor 36 zur Erfassung eines Schaltwunschs durch Betätigung des Ganghebels 23, einem Sensor 38 zur Erfassung der Stellung der Kupplung 4, einem Sensor 40 für die Stellung des Aktors 25, einem Sensor 42 zur Erfassung der Kühlwassertemperatur, und einem Sensor 44 zur Erfassung der Temperatur der Ansaugluft erhält.

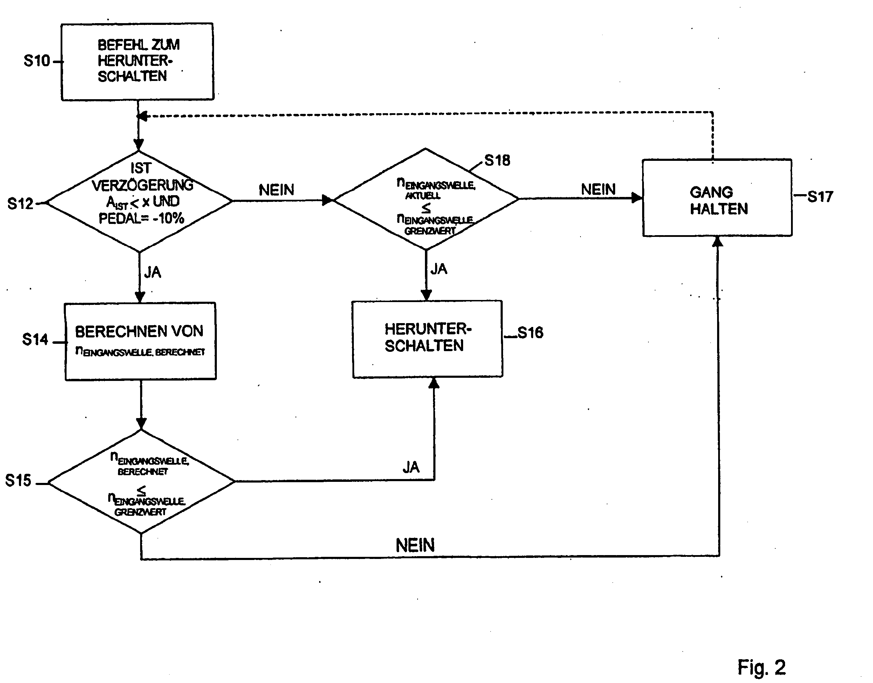

Wenn das Steuergerät 31 mittels des Sensors 36 zur Erfassung eines Schaltwunschs einen Schaltwunsch des Fahrers, den dieser durch eine Betätigung des Schalthebels 23 eingeleitet hat, in Schritt S10 (Figur 2) erfasst, überprüft das Steuergerät 31, ob gleichzeitig eine Fahrzeugverzögerung $A_{ist}$ vorliegt, die unter einem Schwellenwert x liegt. $A_{ist}$ als Verzögerung des Fahrzeugs weist negatives Vorzeichen auf. Die Fahrzeugverzögerung $A_{ist}$ wird beispielsweise durch einen Beschleunigungssensor 50 erfasst.

Außerdem erfasst das Steuergerät 31, ob ein Bremsvorgang vorliegt, d. h. ob das Bremspedal betätigt ist und die Bremsen aufgebracht werden. Dies geschieht beispielsweise über einen Sensor 52 im Bremsgerät 16. "Pedal = -10 %" entspricht einem Bremsvorgang.

In Schritt S12 entscheidet das Steuergerät 31, ob eine Fahrzeugverzögerung unter einem vorgegebenen Schwellenwert vorliegt, d. h. ob ein Abbremsvorgang vorliegt, der zu einer stärkeren Bremswirkung als einem vorgegebenen Schwellenwert führt, und gleichzeitig die Bremsen aufgebracht sind. Wenn dies der Fall ist, wird in Schritt S14 die Drehzahl der Eingangswelle nach dem Schaltvorgang unter der Annahme, dass der Schaltvorgang unmittelbar ausgeführt wird, berechnet. Dabei ist die Drehzahl der Getriebeeingangswelle nach dem Schaltvorgang:

$$n_{Eingangswelle, berechnet} = n_{Rad, berechnet} \cdot i_{Zielgang},$$

mit

$$n_{Rad, berechnet} = n_{Rad, aktuell} + (60 \cdot A_{ist} \cdot t^2)/(2 \cdot \pi \cdot r),$$

wobei
$i_{Zielgang}$ das Übersetzungsverhältnis zwischen Raddrehzahl und Drehzahl der Eingangswelle beim Zielgang ist;
r ein dynamischer Reifenradius ist;
t die Zeit zum Durchführen des Schaltvorgangs in Sekunden ist;
$A_{ist}$ die Verzögerung des Fahrzeugs in m/s$^2$ ist (negativ für Bremsvorgänge);
$n_{Rad, aktuell}$ die aktuelle Raddrehzahl ist; und
$n_{Rad, berechnet}$ die berechnete Raddrehzahl nach dem Schaltvorgang ist.

Insbesondere geht also in den berechneten Wert für die Drehzahl der Eingangswelle $n_{Eingangswelle, berechnet}$ die aktuelle Raddrehzahl sowie eine Zeit t ein, die als durchschnittlich Zeit zum Durchführen des Schaltvorgangs angesetzt wird. Diese Zeit t variiert je nach Getriebe, ist aber grundsätzlich bekannt. In Schritt S15 wird anschließend bestimmt, ob der berechnete Drehzahlwert für die Eingangswelle nach dem Schaltvorgang $n_{Eingangswelle, berechnet}$ unter einem Grenzwert für die Drehzahl der Eingangswelle beim Einlegen des niedrigeren Gangs liegt. Dieser Grenzwert ist derart festgelegt, dass ein sogenanntes Überdrehen des Getriebes bzw. Motors vermieden wird. Liegt der berechnete Wert unter dem zulässigen Grenzwert, so veranlasst das Steuergerät 31 in Schritt S16 ein unmittelbares Herunterschalten in den vom Fahrer gewünschten Gang, wenngleich die aktuelle Drehzahl der Eingangswelle möglicherweise noch über der tolerierbaren Drehzahl der Eingangswelle nach dem Schaltvorgang liegt. Dabei wird ausgenutzt, dass während des Schaltvorgangs die Drehzahl der Eingangswelle des Getriebes noch weiter abfällt. Der erlaubbare Grenzwert für die Drehzahl der Eingangswelle nach dem Schaltvorgang $n_{Eingangswelle, Grenzwert}$ ist abhängig von dem vom Fahrer gewünschten einzulegenden Gang.

Wenn in Schritt S15 festgestellt wird, dass der berechnete, vorhergesagte Drehzahlwert für die Eingangswelle $n_{Eingangswelle, berechnet}$ über dem Grenzwert für die Drehzahl der Eingangswelle liegt, so veranlasst das Steuergerät 31, dass der bislang vorliegende Gang noch weiter gehalten wird (Schritt S17). Vorzugsweise beginnt die Routine in diesem Fall mit Schritt S12 erneut, solange bis ein Schaltvorgang durchgeführt werden kann.

Wird bereits in Schritt S12 festgestellt, dass die Fahrzeugverzögerung (in $m/s^2$) nicht klein genug ist bzw. dass keine Bremsen aufgebracht sind, so springt die Routine auf Schritt S18. Dort wird überprüft, ob der aktuelle Drehzahlwert für die Eingangswelle $n_{Eingangswelle, aktuell}$ kleiner oder gleich einem Grenzwert für die Drehzahl der Eingangswelle nach dem Schaltvorgang ist, d. h. ob die aktuelle Drehzahl der Eingangswelle bereits unter den nach dem Schaltvorgang tolerierbaren Wert abgefallen ist. Ist dies der Fall, so wird in Schritt S16 durch das Steuergerät 31 ein Schaltvorgang zum Schalten in den niedrigeren Gang eingeleitet. Ist dies nicht der Fall, so wird in Schritt S17 der eingelegte Gang gehalten und die Routine beginnt gegebenenfalls mit Schritt S12 erneut.

### Bezugszeichenliste

2     Brennkraftmaschine

4     Kupplung

6     Getriebe

8     Kardanwelle

10     Differential

12     Hinterräder

14     Bremsanlage

16     Bremsgerät

18     Bremspedal

19     Fahrpedal

21     Drosselklappe

23     Schalthebel

25     Aktor

27     Geberzylinder

29     Nehmerzylinder

31     Steuergerät

32     Sensor

34     Sensor

| 36 | Sensor |
|----|--------|
| 38 | Sensor |
| 40 | Sensor |
| 42 | Sensor |
| 44 | Sensor |
| 48 | Kupplungshebel |
| 50 | Beschleunigungssensor |
| 52 | Sensor |

**Patentansprüche**

1. Verfahren zum Regeln eines auf einem Schaltbefehl eines Fahrers beruhenden Schaltvorgangs zum Schalten von einem höheren Ausgangsgang in einen niedrigeren Zielgang bei einem automatisierten Schaltgetriebe, enthaltend die Schritte:

   (a) Bestimmen, ob gegenwärtig ein Abbremsvorgang mit einer Fahrzeugverzögerung ($A_{ist}$) kleiner als ein Schwellenwert (x) vorliegt;
   (b) Wenn $A_{ist} < x$: Berechnen eines vorhergesagten Werts ($n_{Engangswelle, berechnet}$) für die Drehzahl einer Getriebeeingangswelle nach dem Schaltvorgang basierend auf der aktuellen Drehzahl eines Rads ($n_{Rad, aktuell}$) und der Fahrzeugverzögerung ($A_{ist}$); und
   (c) Wenn der vorhergesagte Wert ($n_{Eingngswelle, berechnet}$) für die Drehzahl der Eingangswelle kleiner oder gleich einem Grenzwert ($n_{Eingangswelle, Grenzwert}$) für die Drehzahl der Eingangswelle ist: Unmittelbares Durchführen des Schaltvorgangs.

2. Verfahren nach Anspruch 1, **dadurch gekennzeichnet, dass** die Vorhersage ($n_{Eingangswelle, berechnet}$) für die Drehzahl die Zeitdauer (t) zum Durchführen des Schaltvorgangs berücksichtigt.

3. Verfahren nach Anspruch 2, **dadurch gekennzeichnet, dass** die Vorhersage für die Drehzahl ($n_{Eingangswelle, berechnet}$) nach folgender Formel bestimmt wird:

$$n_{Eingangswelle, berechnet} = n_{Rad, berechnet} \cdot i_{Zielgang,}$$

mit

$$n_{Rad, berechnet} = n_{Rad, aktuell} + (60 \cdot A_{ist} \cdot t^2)/(2 \cdot \pi \cdot r),$$

wobei
$i_{Zielgang}$ das Übersetzungsverhältnis zwischen Raddrehzahl und Drehzahl der Eingangswelle beim Zielgang ist;
r ein dynamischer Reifenradius ist;
t die Zeit zum Durchführen des Schaltvorgangs in Sekunden ist;
$A_{ist}$ die Verzögerung des Fahrzeugs in m/s$^2$ ist (negativ für Bremsvorgänge);
$n_{Rad, aktuell}$ die aktuelle Raddrehzahl ist; und
$n_{Rad, berechnet}$ die berechnete Raddrehzahl nach dem Schaltvorgang ist.

4. Verfahren nach einem der vorhergehenden Ansprüche, **dadurch gekennzeichnet, dass** in Schritt (a) zusätzlich bestimmt wird, ob die Fahrzeugverzögerung durch mindestens eine vorgegebene Minimalbremskraft verursacht ist.

5. Verfahren nach Anspruch 4, **dadurch gekennzeichnet, dass** Schritte (b) und (c) nur durchgeführt werden, wenn mindestens eine durch ein Bremsgerät des Fahrzeugs aufgebrachte vorgegebene Minimalbremskraft vorliegt.

6. Verfahren nach einem der vorhergehenden Ansprüche, **dadurch gekennzeichnet, dass** in Schritt (c) bei einer Bestimmung, dass der vorhergesagte Wert für die Drehzahl der Eingangswelle ($n_{\text{Eingangswelle, berechnet}}$) nicht kleiner oder gleich einem Grenzwert ($n_{\text{Eingangswelle, Grenzwert}}$) für die Drehzahl der Eingangswelle ist, mit dem Schaltvorgang gewartet wird und der Ausgangsgang gehalten wird, bis eine aktuelle Drehzahl der Eingangswelle ($n_{\text{Eingangswelle, aktuell}}$) kleiner oder gleich dem Grenzwert ($n_{\text{Eingangswelle, Grenzwert}}$) für die Drehzahl der Eingangswelle ist, wonach der Schaltvorgang unmittelbar durchgeführt wird.

7. Verfahren nach einem der vorhergehenden Ansprüche, **dadurch gekennzeichnet, dass** in Schritt (c) bei einer Bestimmung, dass der vorhergesagte Wert für die Drehzahl der Eingangswelle ($n_{\text{Eingangswelle, berechnet}}$) nicht kleiner oder gleich einem Grenzwert ($n_{\text{Eingangswelle, Grenzwert}}$) für die Drehzahl der Eingangswelle ist, mit dem Schaltvorgang gewartet wird, der Ausgangsgang gehalten wird und Schritte (a) bis (c) wiederholt durchgeführt werden, bis der vorhergesagte Wert für die Drehzahl der Eingangswelle ($n_{\text{Eingangswelle, berechnet}}$) kleiner oder gleich einem Grenzwert ($n_{\text{Eingangswelle, Grenzwert}}$) für die Drehzahl der Eingangswelle ist, wonach der Schaltvorgang unmittelbar durchgeführt wird.

8. Verfahren nach einem der vorhergehenden Ansprüche, **dadurch gekennzeichnet, dass**, wenn im Schritt (a) festgestellt wird, dass die Fahrzeugverzögerung ($A_{\text{ist}}$) nicht kleiner als der Schwellenwert (x) ist, bestimmt wird, ob eine aktuelle Drehzahl der Eingangswelle ($n_{\text{Eingangswelle, aktuell}}$) kleiner oder gleich dem Grenzwert ($n_{\text{Eingangswelle, Grenzwert}}$) für die Drehzahl der Eingangswelle ist, und ein Schaltvorgang nur durchgeführt wird, wenn die aktuelle Drehzahl der Eingangswelle ($n_{\text{Eingangswelle, aktuell}}$) kleiner oder gleich dem Grenzwert ($n_{\text{Eingangswelle, Grenzwert}}$) für die Drehzahl der Eingangswelle ist.

**Claims**

1. Method for regulating a shift process, which is based on a shift command from a driver, for shifting from a higher initial gear into a lower target gear in an automatic gearbox, comprising the steps:

(a) determining whether a braking process with a vehicle deceleration ($A_{\text{ist}}$) of lower than a threshold value (x) is present;
(b) if $A_{\text{ist}} < x$: calculating a predicted value ($n_{\text{input shaft, calculated}}$) for the rotational speed of a gearbox input shaft after the shift process on the basis of the present rotational speed of a wheel ($n_{\text{wheel, present}}$) and the vehicle deceleration ($A_{\text{ist}}$) ; and
(c) if the predicted value ($n_{\text{input shaft, calculated}}$) for the rotational speed of the input shaft is lower than or equal to a limit value ($n_{\text{input shaft, limit value}}$) for the rotational speed of the input shaft: directly carrying out the shift process.

2. Method according to Claim 1, **characterized in that** the prediction ($n_{\text{input shaft, calculated}}$) for the rotational speed takes into consideration the time period (t) for carrying out the shift process.

3. Method according to Claim 2, **characterized in that** the prediction for the rotational speed ($n_{\text{input shaft, calculated}}$) is determined according to the following formula:

$$n_{\text{input shaft, calculated}} = n_{\text{wheel, calculated}} \cdot i_{\text{target gear}},$$

where

$$n_{\text{wheel, calculated}} = n_{\text{wheel, present}} + (60 \cdot A_{\text{ist}} \cdot t^2)/(2 \cdot \pi \cdot r),$$

where

$i_{\text{target gear}}$ is the transmission ratio between the wheel rotational speed and the rotational speed of the input shaft in the target gear;

r is a dynamic tyre radius;

t is the time for carrying out the shift process, in seconds;

$A_{ist}$ is the deceleration of the vehicle in m/s$^2$ (negative for braking processes);

$n_{wheel}$, present is the present wheel rotational speed; and

$n_{wheel}$, calculated is the calculated wheel rotational speed after the shift process.

4. Method according to one of the preceding claims, **characterized in that**, in step (a), it is additionally determined whether the vehicle deceleration is caused by at least one predefined minimum braking force.

5. Method according to Claim 4, **characterized in that** steps (b) and (c) are carried out only if at least one predefined minimum braking force applied by means of a brake system of the vehicle is present.

6. Method according to one of the preceding claims, **characterized in that**, in step (c), if it is determined that the predicted value for the rotational speed of the input shaft ($n_{input shaft, calculated}$) is not lower than or equal to a limit value ($n_{input shaft, limit value}$) for the rotational speed of the input shaft, the shift process is delayed and the initial gear is held until a present rotational speed of the input shaft ($n_{input shaft, present}$) is lower than or equal to the limit value ($n_{input shaft, limit value}$) for the rotational speed of the input shaft, after which the shift process is carried out directly.

7. Method according to one of the preceding claims, **characterized in that**, in step (c), if it is determined that the predicted value for the rotational speed of the input shaft ($n_{input shaft, calculated}$) is not lower than or equal to a limit value ($n_{input shaft, limit value}$) for the rotational speed of the input shaft, the shift process is delayed, the initial gear is held and steps (a) to (c) are carried out repeatedly until the predicted value for the rotational speed of the input shaft ($n_{input shaft, calculated}$) is lower than or equal to a limit value ($n_{input shaft, limit value}$) for the rotational speed of the input shaft, after which the shift process is carried out directly.

8. Method according to one of the preceding claims, **characterized in that**, if it is detected in step (a) that the vehicle deceleration ($A_{ist}$) is not lower than the threshold value (x), it is determined whether a present rotational speed of the input shaft ($n_{input shaft, present}$) is lower than or equal to the limit value ($n_{input shaft, limit value}$) for the rotational speed of the input shaft, and a shift process is carried out only if the present rotational speed of the input shaft ($n_{input shaft, present}$) is lower than or equal to the limit value ($n_{input shaft, limit value}$) for the rotational speed of the input shaft.

**Revendications**

1. Procédé pour réguler une opération de changement de rapport qui se base sur une commande de changement de rapport d'un conducteur pour passer d'un rapport initial élevé à un rapport voulu plus faible avec une boîte de vitesses automatisée, comprenant les étapes suivantes :

   a) Détermination de la présence actuelle d'une opération de freinage avec un ralentissement du véhicule ($A_{ist}$) inférieur à une valeur de seuil (x) ;

   b) si $A_{ist} < x$ : Calcul d'une valeur prévisionnelle ($n_{arbre d'entrée, calculée}$) de la vitesse de rotation d'un arbre d'entrée de la boîte de vitesses après l'opération de changement de rapport en se basant sur la vitesse de rotation actuelle d'une roue (enroue, actuelle) et le ralentissement du véhicule ($A_{ist}$) ;

   c) si la valeur prévisionnelle ($n_{arbre d'entrée, calculée}$) de la vitesse de rotation de l'arbre d'entrée est inférieure ou égale à une valeur limite ($n_{arbre d'entrée, valeur limite}$) de la vitesse de rotation de l'arbre d'entrée : Accomplissement immédiat de l'opération de changement de vitesse.

2. Procédé selon la revendication 1, **caractérisé en ce que** la valeur prévisionnelle ($n_{arbre d'entrée, calculée}$) de la vitesse de rotation tient compte de la durée (t) nécessaire pour accomplir l'opération de changement de vitesse.

3. Procédé selon la revendication 2, **caractérisé en ce que** la valeur prévisionnelle ($n_{arbre d'entrée, calculée}$) de la vitesse de rotation est déterminée d'après la formule suivante :

$$n_{\text{arbre d'entrée, calculée}} = n_{\text{roue, calculée}} * i_{\text{Rapport\_voulu}},$$

où

$$n_{roue,\ calculée} = n_{roue,\ actuelle} + (60 \cdot A_{ist} \cdot t^2)/(2 \cdot \pi \cdot r),$$

avec $i_{rapport\_voulu}$ désignant le rapport de démultiplication entre la vitesse de rotation de la roue et la vitesse de rotation de l'arbre d'entrée avec le rapport voulu ;

r désignant un rayon de pneu dynamique ;

t désignant le temps, en secondes, nécessaire pour accomplir l'opération de changement de rapport ;

$A_{ist}$ désignant le ralentissement du véhicule en m/s$^2$ (négatif dans le cas des freinages) ;

$n_{roue,\ actuelle}$ désignant la vitesse de rotation actuelle de la roue ; et

$n_{roue,\ calculée}$ désignant la vitesse de rotation calculée de la roue après l'opération de changement de vitesse.

4. Procédé selon l'une des revendications précédentes, **caractérisé en ce que** dans l'étape a), on détermine en plus si le ralentissement du véhicule est provoqué par au moins une force de freinage minimale prédéfinie.

5. Procédé selon la revendication 4, **caractérisé en ce que** les étapes b) et c) ne sont exécutées que s'il existe au moins une force de freinage minimale appliquée par un dispositif de freinage du véhicule.

6. Procédé selon l'une des revendications précédentes, **caractérisé en ce que** dans l'étape c), s'il est déterminé que la valeur prévisionnelle ($n_{arbre\ d'entrée,\ calculée}$) de la vitesse de rotation de l'arbre d'entrée n'est pas inférieure ou égale à une valeur limite ($n_{arbre\ d'entrée,\ valeur\ limite}$) de la vitesse de rotation de l'arbre d'entrée, l'opération de changement de rapport est mise en attente et le rapport initial est maintenu jusqu'à ce qu'une vitesse de rotation actuelle de l'arbre d'entrée ($n_{arbre\ d'entrée,\ actuelle}$) est inférieure ou égale à une valeur limite ($n_{arbre\ d'entrée,\ valeur\ limite}$) de la vitesse de rotation de l'arbre d'entrée, après quoi l'opération de changement de rapport a lieu immédiatement.

7. Procédé selon l'une des revendications précédentes, **caractérisé en ce que** dans l'étape c), s'il est déterminé que la valeur prévisionnelle ($n_{arbre\ d'entrée,\ calculée}$) de la vitesse de rotation de l'arbre d'entrée n'est pas inférieure ou égale à une valeur limite ($n_{arbre\ d'entrée,\ valeur\ limite}$) de la vitesse de rotation de l'arbre d'entrée, l'opération de changement de rapport est mise en attente et les étapes a) à c) sont de nouveau exécutées jusqu'à le rapport initial est maintenu jusqu'à ce que la valeur prévisionnelle de la vitesse de rotation de l'arbre d'entrée ($n_{arbre\ d'entrée,\ calculée}$) est inférieure ou égale à une valeur limite ($n_{arbre\ d'entrée,\ valeur\ limite}$) de la vitesse de rotation de l'arbre d'entrée, après quoi l'opération de changement de rapport a lieu immédiatement.

8. Procédé selon l'une des revendications précédentes, **caractérisé en ce que** dans l'étape a), s'il est déterminé que le ralentissement du véhicule ($A_{ist}$) n'est pas inférieur à la valeur de seuil (x), il est alors déterminé si une vitesse de rotation actuelle de l'arbre d'entrée ($n_{arbre\ d'entrée,\ actuelle}$) est inférieure ou égale à la valeur limite ($n_{arbre\ d'entrée,\ valeur\ limite}$) de la vitesse de rotation de l'arbre d'entrée et une opération de changement de rapport n'est accomplie que lorsque la vitesse de rotation actuelle de l'arbre d'entrée ($n_{arbre\ d'entrée,\ actuelle}$) est inférieure ou égale à la valeur limite ($n_{arbre\ d'entrée,\ valeur\ limite}$) de la vitesse de rotation de l'arbre d'entrée.

Fig. 1

**Fig. 2**

- S10 — BEFEHL ZUM HERUNTER-SCHALTEN
- S12 — IST VERZÖGERUNG $A_{IST} < x$ UND PEDAL = -10%
  - NEIN → S18
  - JA → S14
- S14 — BERECHNEN VON $n_{ENGANGSWELLE, BERECHNET}$
- S15 — $n_{ENGANGSWELLE, BERECHNET} \leq n_{ENGANGSWELLE, GRENZWERT}$
  - JA → HERUNTER-SCHALTEN
  - NEIN → GANG HALTEN
- S16 — HERUNTER-SCHALTEN
- S18 — $n_{ENGANGSWELLE, AKTUELL} \leq n_{ENGANGSWELLE, GRENZWERT}$
  - JA → S16 HERUNTER-SCHALTEN
  - NEIN → S17 GANG HALTEN
- S17 — GANG HALTEN

10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6024673 A
- EP 0239416 B1

- US 6530291 B1